# EUROPEAN PATENT APPLICATION

(11) **EP 2 777 395 A1**
(43) Date of publication of application: **17.09.2014**
(21) Application number: 14152225.0
(22) Date of filing: 23.01.2014
(51) Int. Cl.: A01N 25/04, A01N 65/00, A01N 65/03, A01N 65/20, A01P 1/00, A01P 21/00

(54) **Plant wash**

(30) Priority: 14.03.2013 US 201313829128
(71) Applicant: S.S. STEINER, INC., New York, NY 10065-8043 (US)
(72) Inventor: Ellis, Roger, Rolland, Tieton, WA 98947 (US)
(74) Representative: Prinz & Partner

(57) **Abstract**

A plant wash comprising a mixture of hop extract, a surfactant and water, is useful for increasing plant growth and fruit yield.

## Description

### Cross Reference to Related Applications

This application is a continuation-in-part of U.S. Application 12/624,198, filed November 23, 2009, which application, in turn, claims priority from U.S. Provisional Application 61/121,102, filed December 9, 2008, the contents of which are incorporated herein by reference.

### Background of the Invention

The present invention relates to a plant wash. The invention has particular utility as a plant wash for fruit and vegetables for increasing plant growth and fruit and vegetable yield, and for promoting earlier and more uniform ripening of fruit and vegetables. The tree wash also provides protection against freeze damage, or for protection against bacterium such as Fire Blight, or for protection against Codling Moth, Leafroller, Pear Psylla, White Apple Leafhopper, Green Apple Aphid and Wooley Apple Aphid infestations, or protection from fungi such as powdery mildew, downy mildew, Cladosporium Cucumerinum (Gamosis) and wilt.

Hops are primarily used in the brewing of beer. It is known that compounds derived from flowers of the female hop plant *(Humulus lupulus L.)* contribute a desirable bitter flavor to beer. This bitterness derives from the so-called α-acids, an homologous series of organic acids that are converted during the boiling of the brewer's wort into highly bitter, isomerized α-acids (iso-α-acids). Hops also contain an analogous series of β-acids. These substances, which have very low aqueous solubility, are of little value in brewing and are almost entirely eliminated from the wort by precipitation in the proteinaceous "trub" that forms during the boil. Many brewers now use extracts of hops which are convenient and much more stable that the traditional dried hops. Such products are made by extracting the hops with organic solvent (almost exclusively ethanol) or, more commonly, with carbon dioxide in either liquid or supercritical state. These extracts contain high contents of α-acids and β-acids, most of the remainder consisting of hop oils, waxes and uncharacterized resins. Typically, the α-acids content of a hop extract is in the range 35 - 65% by weight, that of the β-acids 15 - 40%. Hop processing companies have for many years also offered brewers a choice of more refined products that are prepared from the hop extracts by means of fractionation and chemical conversion, many of which may be added into the brewing process after fermentation of the wort. Such products include aqueous preparations of purified iso-α-acids, and their chemically reduced derivatives, especially tetrahydroiso-α-acids. In the course of preparation of these products, the hop processor will typically obtain a by-product fraction that comprises primarily a mixture of β-acids and hop oils, plus some minor components including waxes and small amounts of iso-α-acids. This fraction, commonly known as "β-Fraction" "Beta Aroma Extract" or "Base Extract" is often sold to brewers for addition to the wort kettle, where the hop oil component imparts aromatic flavors. However, it is also common to separate the oils from the β-acids, enabling a more potent "Aroma Extract" to be offered and releasing the β-acids for other uses.

In addition to being used for the purpose of contributing bitter and aromatic flavors to beer, hops are known to be useful to control bacterial growth during the brewing process. It has been demonstrated that the hop resin acids (α-acids, β-acids, iso-α-acids and chemically reduced iso-α-acids such as tetrahydroiso-α-acids) have anti-microbial activity and are especially active against Gram positive bacteria. Consequently, several uses for hop resin acids in food processing, cosmetic and pharmaceutical applications have been described. β-acids are generally considered to be particularly effective, natural antibacterial agents. In WO 00/52212 it is noted that "certain hop acids exhibit anti-bacterial effects in sugar containing aqueous mediums. European Patent Application No. 681 029 A2 discloses a process for inhibiting thermophilic micro-organisms in the presence of sucrose aqueous medium, in which a hop based product is added to a sucrose aqueous medium at temperatures between 50°C and 80°C. And, U.S. Patent No. 5,286,506 discloses a process of applying a solution containing beta acids to a solid food product to prevent growth of Listeria. According to Arch. Mikrobiol. 94 (1973), p. 159-171 beta acids exhibit the highest bacteriostatic effect in comparison to alpha acids and isoalpha acids; however, because of its poor solubility, certain concentrations of beta-acids cannot be exceeded." Hop resin acids, especially β-acids, have also been described as effective antibacterial agents in food processing in US Provisional Patent No. 2002/0197366, US Patent No. 6,251,461 and US Patent No. 6,475,537, and have recently also been shown to have useful activity against algal growth in water systems (US Patent No. 6,379,720 and PCT Application No. WO 02/078450), protozoa (US Patent No. 6,352,726 and US Patent No. 6,423,317) and have been proposed as active agents against mastitis in cows, wherein the hop compound can be applied to the udders and teats of cows (US Patent Application No. 2003 / 0013773. The possibility to use hop acids in mouthwashes or toothpastes to suppress the activity of *Streptococcus mutans* and thus help to prevent caries has been described in US Patent No. 5,370,863. The general mechanism by which hop acids are believed to act against susceptible (Gram +ve) bacteria has been discussed by Simpson and Smith (Simpson, W.J., and Smith, A.R.W., 1992 in "Factors affecting antimicrobial activity of hop compounds and their derivatives". The Journal of Applied Bacteriology 72 (4):327-334).

Other beneficial applications have been found for hops extract generally and β-acids specifically. For example, U.S. Application No. 2005/0220914 describes an organic pesticide made from components of hop extract. The hops extract is suspended in colloidal emulsions in water and are used as a pesticide spray for pests such as spider mites, powdery mildews, downy mildews and late blights.

### Summary of the Invention

The present invention is based on the discovery that hop extract when diluted and sprayed on plants, in particular fruit trees and vegetables, increases plant growth and fruit or vegetable yield, and promotes earlier and more uniform ripening of fruit or vegetables. Other observed effects include protection against freeze damage, protection against bacterium such as Fire Blight, protection against Codling Moth, Leafroller, Pear Psylla, White Apple Leafhopper, Green Apple Aphid and Wooley Apple Aphid infestations, and protection against fungi such as powdery mildew, downy mildew Cladosporium Cucumerinum (Gamosis) and wilt.

### Detailed Description of the Invention

The present invention employs a mixture or blend of hop extract mixed with a surfactant and optionally including one or more other ingredients in a spray. More particularly, I have found that a spray of water, hop extract and a surfactant, and optionally including one or more additional ingredients, when applied as a wash to fruit trees or vegetable plants, produces several advantageous affects.

That is to say, I have found that hop extract, when sprayed on fruit and vegetable plants promotes plant growth and fruit or vegetable yield, results in an increase in sugar Brix, and promotes earlier and more uniform ripening of fruit or vegetables and earlier harvest. In accordance with the present invention, a mixture of a hop extract and surfactant, diluted with water, and applied to the plants regularly beginning early in the growing season increases fruit or vegetable yield, and increases plant growth and uniformity of ripening. Preferably, but not necessarily, the plant wash is applied prior to plant flowering, and every 7-21 days thereafter preferably every 10-16 days, most preferably about every 14 days. The plant wash should be applied under weather conditions that will permit the wash to dry on the plant leaves.

If desired, one or more additional compounds or materials could be added to add additional function. For example, menthol may be added as a bird repellant. Other materials such as kemp and/or molasses which function as spreader-stickers, and yucca extract may be added as a foaming agent. Application of hop extract as a wash throughout the growing season also results in an increase in sugar Brix in fruit or vegetables allowing earlier harvest of fruit or vegetables.

Dormant oil also may be added to the spray. Dormant oil spray has been used for many years for pest control on fruit trees. Dormant oil sprays work by suffocating certain over-wintering pests. Various dormant oils are available commercially and generally comprise refined petroleum oils or mineral oils having an emulsifier added to allow the oil to be mixed with water. A few commercially available dormant oils are made from vegetable oils such as cottonseed oil and/or soybean oil. As used herein the term "dormant oil" is intended to include both mineral oils and vegetable oils. Particularly preferred as dormant oils are mineral oils and soybean oils. Hop extracts have been known to be effective against mildew and certain (gram positive) bacterial infections, and mites. However, when dormant oil and hop extract are applied together as a spray, the combination unexpectedly provides several additional effects including freeze damage, effective protection against bacterium such as Fire Blight, protection against Codling Moth, Leafroller, Pear Psylla, White Apple Leafhopper, Green Apple Aphid and Wooley Apple Aphid infestations, and protection against fungi such as powdery mildew, downy mildew Cladosporium Cucumerinum (Gamosis) and wilt.

In addition to acting to suffocate over-wintering pests, the dormant oil also acts as a carrier for the oily components of the hop extract, helping to better disperse the water insoluble components of the hop extract in the wash. The hop extract and soybean oil typically are in volume ratios in a range of about 1 to about 10 extract to oil, preferably a range of about 1 to about 5 extract to oil. In a preferred embodiment of the invention, the volume ratio is about 1-2.7 extract to oil.

Also optionally included in the plant wash are 1 to 10 parts, by volume, of menthol. As noted supra, menthol has been used as a bird repellant. However, the synergistic effect, i.e. of increased plant growth and promotion of earlier and uniform ripening, when the menthol is applied as a plant wash in combination with hop extract, previously has not been reported.

In a preferred embodiment of the invention, one or more additional ingredients have been found to positively affect the outcome. These include kelp which in the past has been used as a fertilizer and food thickener, molasses, a syrupy food, and yucca extract which in the past has been used as a foaming agent. Yucca extract is added primarily as a spreader-sticker, and in particular to aid in the sticking of the wash to the plants.

Kelp and molasses also function as spreader-stickers, and all three added ingredients are believed also to contribute to the above-mentioned effects.

The plant wash typically is prepared in concentrated form, and then diluted with water just prior to application. Typically the wash is applied diluted at a rate of about 0.25 to about 2.0 gallons per acre, based on the concentrated mixture, preferably about 0.5 to about 0.8 gallons per acre based on the concentrated mixture, more preferably about 0.625 gallons per acre, based on the concentrated mixture. The mixture may be further diluted when applied as a bath or spray to harvested fruit or vegetables.

Further features and advantages of the invention will be seen from the following working examples:

### Example I

A plant wash concentrate was prepared by mixing together the following ingredients:

### Ingredient Per Container

Hop Extract - 2 to 10% by weight preferably 5% by weight.

SA-7 (surfactant)- 20 % by weight

Water - balance to make 100%

The ingredients were mixed together warm (100°F to 120°F) and packaged in 2.5 gallon airtight containers.

The resulting concentrate was diluted to 400 gallons with water and applied as a spray to Buckeye Gala apple trees in the spring at a rate of 2.5 gallons per four (4) acres. The trees were sprayed every fourteen (14) days through the growing season, beginning when the trees first started to bud. A grove of apple trees in an adjacent field was untreated. The following was observed:
- Fruit was tested as the fruit ripened. The apple orchard which was treated with the tree wash exhibited on average about 14.0 to 14.5% sugar Brix, while the untreated apple orchard in the adjacent filed exhibited on average about 12% sugar Brix, or about 15 to 20% less sugar. Additionally, the apples on trees treated with the wash had a darker red color, and were found to mature at about the same time permitting a single harvest. Apples on the trees in the adjacent untreated grove matured more slowly, and erratically, requiring three passes of color picking.

### Example II

A tree wash concentrate was prepared as in Example I to which was added 12 oz. of Entrust, available from Dow AgroSciences, Indianapolis, Indiana, USA. The concentrate was diluted to 400 gallons with water, and apple trees in a test grove were treated as in Example II. An adjacent grove was treated with Entrust only at the same application rate. Fruit was tested as the fruit ripened and observed to mature at about the same time permitting a single harvest as in Example I. Additionally, fruit harvested from trees in the test grove were found to be completely free of Codling Moth infestation while fruit harvested from trees treated only with Entrust showed occasional Codling Moth damage.

### Example III

A plant wash concentrate was prepared by mixing together the following ingredients:
Ingredients Per Container
Kelp - 5% by weight
Soybean Oil - 12% by weight
Hop Extract - 5% by weight
Molasses - 6% by weight
Yucca Extract - 3% by weight
Water - 69% by weight

All ingredients are mixed together warm (100° F to 120° F) and packaged in 2.5 gallon airtight containers.

The resulting concentrate was diluted to 400 gallons with water and applied as a spray to Buckeye Gala apple trees in the spring at a rate of 2.5 gallons per four (4) acres. The trees were sprayed every fourteen (14) days through the growing season, beginning when the trees first started to bud. A grove of apple trees in an adjacent field was untreated. The following was observed:
- Fruit was tested as the fruit ripened. The apple orchard which was treated with the tree wash exhibited on average about 14.0 to 14.5% sugar Brix, while the untreated apple orchard in the adjacent filed exhibited on average about 12% sugar Brix, or about 15 to 20% less sugar. Additionally, the apples on trees treated with the wash had a darker red color, and were found to mature at about the same time permitting a single harvest. Apples on the trees in the adjacent untreated grove matured more slowly, and erratically, requiring three passes of color picking.
- Gamosis - Trees treated with above tree wash were also found to be less susceptible to Gamosis than untreated trees in the adjacent grove.
- Codling Moth - Fruit harvested from trees treated with the above wash were found to be free of Codling Moth infestation while fruit from untreated trees in the adjacent grove were found to have larvae or worms in the fruit.

### Example IV

80 oz. of the tree wash concentrate as prepared in Example I was diluted in 100 gallons of water and sprayed on an acre of trees every ten to fourteen days for Fire Blight control. Fruit was observed to mature at about the same time as in Example I. Additionally, no Fire Blight infestation was observed. This was unexpected since Fire Blight is a gram negative bacteria, while hop extract heretofore was not considered to be effective against gram negative bacteria. The reason for this startling discovery is not known, but is believed to be as a result of a not yet understood synergy between the hop extract and dormant oil, and possibly also one or more of the other ingredients in the wash.

### Example V

Two gallons of the tree wash concentrate as prepared in Example I was diluted in 400 gallons of water together with two gallons of ProNatural™Calcium (calcium oxide) available from Wil-Gro Professional Products, Fresno, CA.

The resulting diluted was then sprayed at a rate of 100 gallons/acre on apple trees as in Example II. Similar results were observed.

### Example VI

A plant wash concentrate prepared by mixing together the following ingredients; Ingredient Per Container
Kelp - 12 oz. (dry)
Dormant Oil - 32 oz.
Hop Extract - 12 oz.
Molasses - 16 oz.
Yucca Extract - 8 oz.
Menthol - 12 oz.
Add water to make 2.5 gal.

All ingredients are mixed together warm (100°F to 120ºF) and packaged in 2.5 gallon airtight containers.

Two gallons of the resulting wash concentrate plus two gallons of ProNatural Calcium (calcium oxide) available from Wil-Gro Professional Products, Fresno, CA were mixed together in 400 gallons of water.

The resulting diluted wash was then sprayed at a rate of 100 gallons/acre on apple trees as in Example I. Similar results were observed.

### Example VII

A tree wash concentrate was prepared as in Example I, but employing one quart of soybean oil in place of the dormant mineral oil.

Two gallons of the resulting concentrate was diluted in 400 gallons of water, and sprayed at a rate of 100 gallons/acre on apple trees as in Example II. Similar results were observed.

### Example VIII

A tree wash concentrate was prepared as in Example VII.

Two gallons of the resulting concentrate was diluted in 400 gallons of water, and sprayed at a rate of 200 gallons/acre on apple trees. One 20 acre orchard was treated with tree wash at twice the normal dose (200 gallons/acre) and a second 20 acre orchard next to it was not treated. Each 20 acre orchard contained 5 codling moth traps. After one week, the tree wash treated orchard contained 1-2 codling moths per trap and the untreated orchard contained 40-60 codling moths per trap. Also, fruit was observed to mature at about the same time as in Example I.

### Example IX

A tree wash concentrate was prepared as in Example VII, and sprayed at a rate of 100 gallons/acre on apple trees, beginning at the end of June, on an 8 acre block of Buckeye Gala apples. The western side of the block where fire blight was the most severe. After the second application we noticed the fire blight had reseated and after the third application we noticed that the growth tip was starting to grow again. Around the third week of August the 8 acres of tree wash sprayed fruit had a darker red color. At harvest time the non-treated area immediately adjacent the treated area required three passes of color picking, whereas the treated area was picked all at once.

The following year we used the tree wash every 14 days along with foliar calcium on the whole crop. Our crop consultant continued to advise us to use micro shield for fire blight control, not knowing that we were using tree wash instead of micro shield. We asked the crop consultant at least three different times if he thought we were controlling the fire blight. He said that something different was going on because the infected limbs are starting to grow back. We also noticed that the codling moth counts were lower than normal. When harvest time came we were able to pick the entire crop in one pick.

I repeated the experiment the following growing season. All the fruit colored up very well and was all picked in one pick with the exception of the Jonagold. The Jonagold had a large crop which we attribute variations in fruit color. The codling moth counts remained fairly low throughout the season. Fire blight continues to rear its head but the tree wash seems to starve it into submission.

### Example X

A tree wash concentrate was prepared as in Example I, and sprayed at a rate of 0.5L/hector to field strawberries. A plot of like strawberries in an adjacent field were untreated as a control. Another adjacent field of like strawberries was treated using organic natural fish fertilizer. Weekly application of 0.5L/hector of the wash of Example I was applied starting prior to flowering, 30 days after planting, and the results recorded in the Table below:

| Treatment | Dose (ml/ha) | Harvest date and yield | | | | |
|---|---|---|---|---|---|---|
| | | 11/06 | 16/06 | 24/06 | 01/07 | 07/07 |
| Untreated | | 6.78 | 6.08 | 7.62 | 7.0 | 8.5 |
| Tree Wash | 100/750 | 7.73 | 8.41 | 9.45 | 9.0 | 10.07 |
| Tree Wash | 200/1000 | 7.37 | 9.31 | 9.15 | 9.32 | 13.5 |
| Tree Wash | 300 | 8.1 | 9.88 | 10.67 | 8.55 | 13.95 |
| Tree Wash | 400 | 12.51 | 10.93 | 9.87 | 11.55 | 14.65 |
| Tree Wash | 500 | 17.88 | 18.18 | 18.42 | 18.95 | 22.27 |
| Organic Natural Fish Fertilizer | 200 | 18.22 | 18.36 | 19.35 | 20.12 | 24.72 |
| C.V. (%) | | 34.91 | 13.89 | 9.77 | | |

Compared to the (untreated) control, the strawberry fields treated with the wash had increased productivity of strawberries with larger, heavier and more uniform fruit. The result was similar to results achieved using organic natural fish fertilizer. Also, the treated strawberry plants did not show any symptoms of phyto-toxicity.

While the invention has been described by way of example and in terms of a preferred embodiment, it is to be understood that the invention is not limited to the disclosed embodiments. For example, the wash may be applied to harvested fruit or vegetables by spraying. It is thus intended to cover various modifications and similar arrangements as would be apparent to those skilled in the art. Therefore, the scope of the appended claims should be accorded the broadest interpretation so as to encompass all such modifications and similar arrangements.

## Claims

1. A method for increasing yield, and uniformity of ripening of fruit and vegetables from plants which comprises applying a plant wash comprising a hop extract, a surfactant and water to the plant during the growing season.

2. The method of claim 1, wherein the plant wash is applied prior to plant flowering.

3. The method of claim 1 or claim 2, wherein the plant wash is applied every 7-21 days.

4. The method of claim 3, wherein the plant wash is applied every 14 days.

5. The method of any of claims 1-4, wherein the plant wash is applied to the plants at a rate of about 0.25 to about 2.0 gallons per acre.

6. The method of claim 5, wherein the plant wash is applied to the plants at a rate of about 0.5 to about 0.8 gallons per acre.

7. The method of claim 6, wherein the plant wash is applied to the plants at a rate of about 0.625 gallons per acre.

8. The method of any of claims 1-7, wherein the plant wash also includes one or more ingredients to control pests while simultaneously increasing sugar brix and uniform plant ripening.

9. The method of claim 8, wherein the pests include Codling Moth, Leafroller, Pear Psylla, White Apple Leafhopper, Green Apple Aphid and Wooley Apple Aphid.

10. The method of any of claims 1-9, wherein the bacterium comprises Fire Blight.

11. The method of any of claims 1-10, wherein the plant is a fruit tree or vegetable plant.

12. The method of any of claims 1-11, wherein the fungus is powdery mildew, downy mildew, Gamosis and wilt.

13. The method of any of claims 1-12, wherein the plant wash also protects the plants against freeze damage.

14. The method of any of claims 1-13, wherein the plant wash also includes methanol.

15. The method of any of claims 1-14, wherein the plant wash also includes one or more added ingredients selected from dormant oil, kelp, molasses, yucca extract and calcium oxide.
